Europäisches Patentamt

(19) European Patent Office

Office européen des brevets

(11) Publication number: **0 027 947**
**B1**

(12) **EUROPEAN PATENT SPECIFICATION**

(45) Date of publication of patent specification: **10.04.85**

(21) Application number: **80106230.8**

(22) Date of filing: **14.10.80**

(51) Int. Cl.⁴: **G 01 P 13/04**

(54) **Device for detecting the direction and speed of rotation of a rotating element.**

(30) Priority: **22.10.79 IT 2667779**

(43) Date of publication of application:
**06.05.81 Bulletin 81/18**

(45) Publication of the grant of the patent:
**10.04.85 Bulletin 85/15**

(84) Designated Contracting States:
**DE FR GB**

(56) References cited:
**DE-A-2 154 829**
**FR-A-2 332 535**
**FR-A-2 404 855**
**US-A-3 935 522**
**US-A-4 016 432**

**SCHEMAS D'APPLICATION DE
SEMICONDUCTEURS, September 1964, page
153, Intermetall, Freiburg i.Br., Hans Bunke Str.
19, DE., "Dispositif de contrôle de rotation"**

(73) Proprietor: **HONEYWELL INFORMATION
SYSTEMS ITALIA S.p.A.
Via Martiri d'Italia 10
I-10014 Caluso (Torino) (IT)**

(72) Inventor: **Dalle Carbonare, Gianbattista
Via Lovati 29
I-27100 Pavia (IT)**

EP 0 027 947 B1

Courier Press, Leamington Spa, England.

## Description

The present invention relates to devices for detecting the direction of rotation of a rotating element and for signalling both the actual direction of rotation and any variation from a predetermined rotational speed.

Devices for detecting the speed and the direction of rotation of a rotating element are known in the prior art.

An example of such devices is the one described in French Patent FR—A—2,404,855, relating to digital tachometers which utilizes a logic circuit comprised of 8 AND and 2 OR gates having two inputs and two outputs.

Two pulse signals, which can be obtained from the rotation movement, are applied to the inputs.

According to the direction of rotation, one of the two outputs is at logic level 0 while the other one presents a pulse train whose frequency is proportional to the rotational speed.

Such device, already complex in its structure, is not capable of detecting by itself the direction and the speed of rotation of a rotating element; to carry out such operation further circuits, which make it more complex and expensive, are needed.

The present invention device is simplified and therefore is particularly suitable as a protection circuit as well as useful in several applications for control purpose.

Its utilization is particularly suitable for fan monitoring. Cooling fans are necessary to dispose of the heat developped inside the equipments which are characterized by great electrical heat-converted power losses, as for instance the motion-picture projectors, power supplies for processors and electronic equipments, electronic equipments themselves and so on.

For ventilation purposes several control devices for electrical fans are known in the prior art, as for instance the one described in U.S. Patent US—A—3,935,522, but their main purpose is the one to obtain different working speed for the fan, without providing to the equipments any protection from possible failures.

It is a purpose of the present invention which is as defined by claim 1 to provide a device for detecting direction and speed of rotation of a rotating element which, when used in the particular field of ventilation, controls that the fan is rotating with a rotational speed higher than a predetermined value and provides a signal which allows to intervene quickly, switching off the device, if the fan stops or rotates with a speed lower than a critical one and which provides an intervention signal also in case the fan rotates in the direction opposite to the desired one, which can occur in a system comprising several fans when one of such fans is not working: in such case, in fact, the defective fan can be drawn to rotate with direction opposite to the normal one owing to the air flow generated by the other fans. These and other features of the invention will appear more clearly from the following detailed description of a preferred form of embodiment and from the attached drawings in which:

Figure 1 shows a preferred embodiment of the invention;

Figure 2a and 2b show the signal waveforms at different points of the circuit where the direction of rotation is correct and where the rotational speed is higher and lower respectively than a predetermined critical speed;

Figure 3 shows the signal waveforms at different points of the circuit where the direction of the rotation is incorrect.

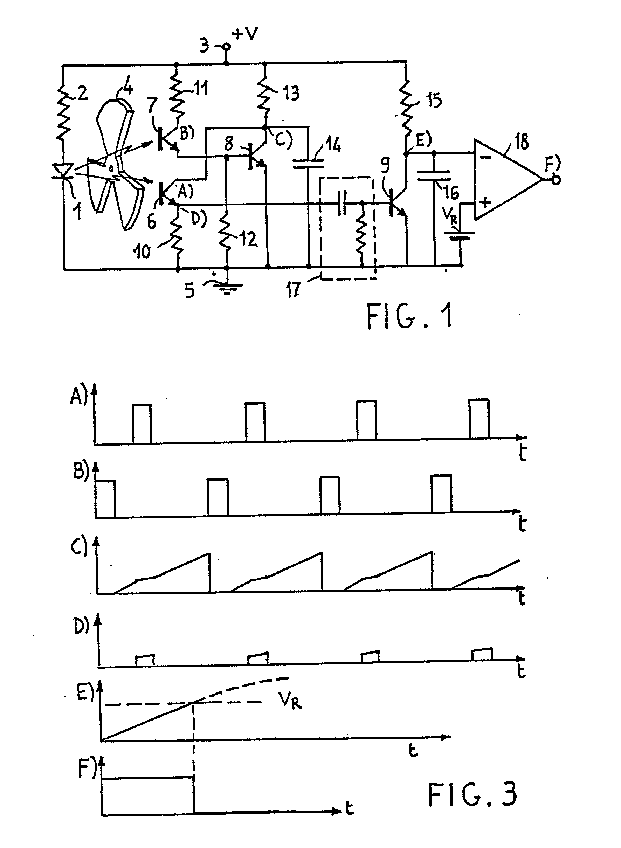

With reference to figure 1 the device according to the invention comprises an emitting photodiode 1 whose cathode is connected to ground 5 and whose anode is connected, through resistor 2, to the positive pole 3 of a +V continuous voltage source.

The negative pole of such continuous voltage source (not shown) is connected to ground 5.

Diode 1 is directly polarized and emits light radiation.

A disk 4 having opaque and transparent sectors, is fixed to a shaft (not shown) whose direction and speed of rotation is to be monitored. Together with photodiode 1, the disk 4 forms a light pulse generator which energizes two phototransistors 6 and 7.

The light pulse duration depends both on the rotational speed of disk 4 and on the angular width of the disk's transparent sectors.

The two phototransistors 6 and 7 are placed in slightly different angular position in order that during disk 4 rotation one phototransistor is lighted before the other one, although, in a paricular angular position of the disk the two phototransistors can be lighted at the same time.

It is also to be noted that if the direction and the speed of rotation of a fan is to be monitored, the fan itself with its vanes may perform the function of disk 4.

Phototransistor 6 has its emitter connected both to ground, through a resistor 10, and to the base of transistor 9; its collector is connected to the collector of transistor 8.

Transistor 9 has its emitter connected to ground and the collector connected to the +V voltage source through a resistor 15.

Transistor 8 has its emitter connected to ground and its collector connected to the +V voltage source through a resistor 13.

A capacitor 14 is connected between collector of transistor 8 and ground.

Likewise a capacitor 16 is connected between collector of transistor 9 and ground.

Phototransistor 7 has its collector connected to the +V voltage source through a resistor 11 and its emitter connected to the base of transistor 8.

A resistor 12 is connected between the base of transistor 8 and ground. Transistor 8 is brought to saturation by phototransistor 7 with a frequency proportional to the rotational speed of disk 4, thereby allowing capacitor 14 to discharge.

It is to be noted that when phototransistor 6 is lighted, and conducting, the voltage level present on capacitor 14 is shared between the internal resistance of phototransistor 6 and the one of resistor 10. Depending on its level the voltage drop on resistor can bring or not bring transistor 9 in saturation.

Collector of transistor 9 is connected to the inverting input of a comparator 18.

The capacitor 16 is connected between collector of transistor 9 and ground.

Even transistor 9, when conducting, allows capacitor 16 to discharge.

A reference voltage $V_R$, corresponding to a suitable fraction $\alpha$ of the voltage supply +V is applied to the non inverting input of comparator 18.

This value $V_R$ is the comparator 18 threshold voltage.

The operation of the circuit is now considered in detail.

When the light emitted by photodiode 1 energizes phototransistor 7, a base current is generated causing conduction of phototransistor 7; through resistor 11 a collector current is therefore drawn and another current with the same order of magnitude flows through resistor 12, causing a voltage drop bringing transistor 8 to saturation.

As soon as transistor 8 gets to saturation, capacitor 14, which is charged during the time intervals when transistor 8 is not conductive, with a time constant given by the value of resistor 13 and the one of capacitor 14, is quickly discharged through transistor 8.

When the light pulse is terminated, phototransistor 7 is returned to interdiction and transistor 8 too, so that capacitor 14 begins to charge again with the already mentioned time constant.

When the light emitted by photodiode 1 energizes phototransistor 6, it becomed conductive thereby presenting an internal resistance value relatively low if compared with the value of resistor 10.

In such situation nearly the whole voltage present at capacitor 14 ends is applied to resistor 10.

It is to be noted that during the period when phototransistor 6 is in conduction the charge time constant of capacitor 14 decreases.

It is now assumed that disk 4 rotates in order to energize first phototransistor 6 and, with a short delay, phototransistor 7 (sequence corresponding to the correct direction of rotation).

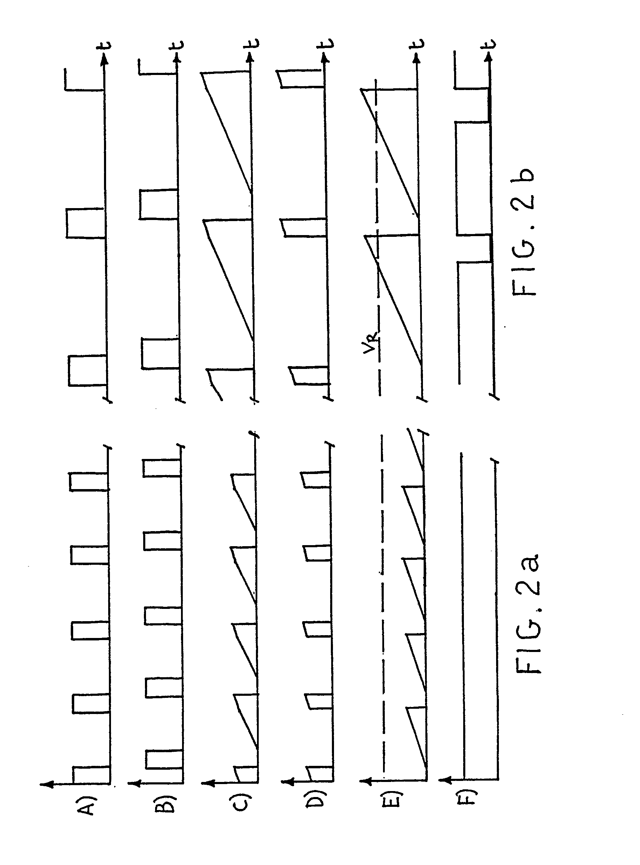

Refer to figures 2a where signal waveforms at several circuit points are shown.

Diagram A) shows a timing diagram of the saturation/conduction or interdiction status of phototransistor 6.

Diagram B) shows a timing diagram of the saturation/conduction or interdiction status of phototransistor 7.

Diagram C) shows a timing diagram of the charge status of capacitor 14.

In case of correct direction of rotation, the timer interval from the end of the light pulse on phototransistor 7 to the beginning of the next light pulse on phototransistor 6 is sufficiently long to enable capacitor 14 to charge at a voltage value which suffices to bring to saturation transistor 9 through the voltage divider formed by the internal resistance of phototransistor 6 and by resistor 10, when phototransistor 6 is conductive. Diagram D) shows a timing diagram of the conduction status of phototransistor 6.

During the interval in which phototransistor 6 is conductive, capacitor 16, which was previously charging through resistor 15, is quickly discharged through transistor 9 (diagram E).

Therefore, when phototransistor 6 is lighted before phototransistor 7 or, in other words, when signal D has a phase angle in advance relative to signal B and the illumination cycles follow with an adequate frequency, capacitor 16 will not reach a charge voltage so high in value as to equal or exceed the reference voltage value $V_R$.

Comparator output will therefore have an high voltage value (diagram F).

It is however evident that if rotational speed decreases to a value for which the luminous pulse train frequency decreases to a value lower than a predetermined minimum one given by:

$$f_{min} = \frac{1}{R_{15}\, C_{16}\, l_n\, (1-\alpha)}$$

where $R_{15}$=resistor 15 value, $C_{16}$=capacitance 16 value and $l_n$ is the natural logarithm notation, the voltage ramp of terminals of capacitor 16 reaches the $V_R$ value of the reference voltage and the output of comparator 18 is brought intermittently down to a low voltage value (diagram F Figure 2b).

In such a case, to avoid that the comparator output rises again to a high voltage value following the discharge of capacitor 16, a simple logic network can be used to memorize the occurrence of an anomalous working condition.

It is now assumed that disk 4 rotates in a way as to light phototransistor 7 first and then phototransistor 6 (sequence corresponding to wrong direction of rotation) that is, signal D has a phase angle in delay relative to signal B.

In such a case the time interval from the end of light pulse on phototransistor 7 and the beginning of the light pulse on phototransistor 6 is too short to enable the charge voltage of capacitor 14 to reach a relatively high value and consequently during conduction of phototransistor 6 the voltage drop on resistor 10 is not sufficient to bring transistor 9 in saturation.

Therefore the charge of capacitor 16 reaches in a short time the $V_R$ value of the voltage reference and consequently output of comparator 18 will drop to a low voltage value.

Figure 3 shows with its waveforms the above situation.

In the preferred embodiment of the invention, photosensitive detectors convert the rotational movement into electrical signals.

Such elements are inexpensive and offer several possibilities of utilization.

It is however obvious that other kinds of transducers can be used to convert the rotational movement into a train of electrical pulses, as for instance magnetoelectric transducers, without departing from the scope of the Claims.

Likewise, further circuit modifications can be made to the device, still without departing from the scope of the claims.

For instance the emitter of transistor 6 can be connected to the base of transistor 9 through an RC17 derivative circuit shown within dotted line in figure 1.

It may happen that, at the power-on, disk 4 does not start to move and that its sectors stand in such a position as to energize phototransistor 6 but not phototransistor 7.

Therefore a relatively high continuous voltage is available at resistor 10 which locks transistor 9 in saturation.

Consequently the charge voltage of capacitor 15 does not reach the $V_R$ value and the devices does not intervene to detect an anomal working condition.

Derivative circuit 17, making transistor 9 sensitive at the rise fronts only of the voltage present at resistor 10 ends, avoids such an unlikely inconvenience.

## Claims

1. A device for detecting direction and speed of rotation of a rotating element (4) comprising first circuit means (7, 11) including transducing means (7), said first circuit means being powered by a DC Voltage source (3) and responsive to rotation of said element for generating a first signal (B) in the form of a pulse train having a frequency related to the rotational speed of said element, second circuit means (8, 13, 14, 12) powered by said DC voltage source, including a first integrating network (13, 14) and a first reset switch (8) for said network, said reset switch receiving at a control input said first·signal, said second circuit means producing at output from said first integrating network a sawtooth-shaped second signal (C) with a frequency equal to the one of said first signal, third circuit means (6, 10) including second transducing means (6) responsive to rotation of said element for generating a third signal (D) in the form of a pulse train having a frequency equal to the one of said first signal, the phase angle relative to said first signal (B) depending on the direction of the rotational speed of said element, characterized in that said third circuit means (6, 10) is powered by said second signal so that said third signal has a variable amplitude depending on said phase angle, and further characterized by fourth circuit means (9, 15, 16) powered by said DC voltage source and including a second integrating network (15, 16) and a second reset switch (9) for said second integrating network said second reset switch being responsive to said third signal when the latter exceeds a predetermined value, the fourth circuit means thereby generating a fourth electrical signal (E)

(a) in the form of sawtooth pulses with a frequency equal to that of said first signal if the amplitude of said third signal is greater than said predetermined value, or

(b) in the form of a voltage rising ramp if the amplitude of said third signal is lower than said predetermined value, and comparing means (18) receiving said fourth signal and generating an information signal (F) when the amplitude of said fourth signal exceeds a predetermined threshold value.

2. Device as claimed in claim 1 characterised in that said first circuit means (7, 11) comprises a first photosensitive element (7) fed by said DC voltage source (3) and intermittently exposed to light from a light source (1) during the rotation of said element (4) to produce said first signal, and wherein said third circuit means (6, 10) comprises a second photosensitive element (6) which is also intermittently exposed to light from said light source during the rotation of said element to produce said third signal.

3. Device as claimed in claim 2 characterised in that said second circuit means (8, 12, 13, 14) comprises a resistor (13) and a capacitor (14), series connected between said DC voltage source (3) and ground (5), and a first transistor switch (8) for short-circuiting said capacitor, said first transistor switch receiving at its base said first signal, and wherein said fourth circuit means (9, 15, 16) comprises a second resistor (15) and a second capacitor (16), series connected between said DC voltage source and the ground and a second transistor switch (9) for short-circuiting said second capacitor, said second transistor receiving at its base said third signal.

## Patentansprüche

1. Vorrichtung zum Feststellen von Drehrichtung und Drehgeschwindigkeit eines rotierenden Teils (4) mit einem ersten Schaltkreis (7, 11), der einen Wandler (7) enthält, aus einer Gleichspannungsquelle (3) mit Strom versorgt wird und auf eine Drehung des Teils anspricht und dabei ein erstes Signal (D) in Form eines Impulszuges erzeugt, dessen Frequenz der Drehgeschwindigkeit des Teils entspricht; einem aus der Gleichspannungsquelle gespeisten zweiten Schaltkreis (8, 13, 14, 12), welcher ein erstes Integrationsnetzwerk (13, 14) und einen ersten Rücksetzschalter (8) aufweist, der an einem Steuereingang das erste Signal empfängt, und wobei der zweite Schaltkreis als Ausgangssignal des ersten integrationsnetzwerkes ein sägezahnförmiges zweites Signal (C) erzeugt, dessen Frequenz gleich derjenigen des ersten Signals ist; einem dritten Schaltkreis (6, 10), welcher einen auf eine Drehung des Teils ansprechenden zweiten Wandler (6) enthält und ein drittes Signal (D) in Form eines Impulszuges erzeugt, dessen Frequenz gleich der der ersten Signals ist, während der Phasenwinkel gegenüber dem ersten Signal (B) von der Drehrichtung des Teils abhängt; dadurch gekennzeichnet, daß der dritte Schaltkreis (6, 10) mit dem zweiten Signal gespeist wird, so daß das dritte Signal eine veränderliche, von genannten Phasenwinkel abhängige Amplitude hat; ferner gekennzeichnet durch einen aus der Gleichspannungsquelle gespeisten vierten Schaltkreis (9, 15, 16), der ein zweites Integriernetzwerk (15, 16) sowie einen zweiten Rücksetzschalter (9) für das zweite Integriernetzwerk enthält, wobei der zweite Rücksetzschalter auf das dritte Signal enspricht, wenn letzteres einen vorgegebenen Wert überschreitet, und wobei der vierte Schaltkreis dabei ein viertes elektrisches Signal (E) erzeugt un zwar

a.) in Form von Sägezahnimpulsen mit einer dem ersten Signal entsprechenden Frequenz, wenn die Amplitude des dritten Signals größer als der vorgegebene Wert ist oder

b.) in Form einer ansteigenden -Spannung, falls die Amplitude des dritten Signals kleiner ist als der vorgegebene Wert;
und weiterhin gekennzeichnet, durch eine Vergleichseinrichtung (18), welche das vierte Signal empfängt und ein Informationssignal (F) erzeugt, wenn dieses vierte Signal einen vorgegebenen Schwellwert überschreitet.

2. Vorrichtung nach Anspruch 1, dadurch gekennzeichnet, daß der erste Schaltkreis (7, 11) ein von der Gleichspannungsquelle (3) gespeistes photoempfindliches Element (7) aufweist, welches während der Drehung des Teils (4) intermittierend dem Licht einer Lichtquelle (1) ausgesetzt ist und das erste Signal erzeugt; und daß der dritte Schaltkreis (6, 10) ein zweites photoempfindliches Element (6) enthält, das während der Drehung des genannten Teils ebenfalls intermittierend dem Licht der Lichtquelle ausgesetzt und das dritte Signal erzeugt.

3. Vorrichtung nach Anspruch 2, dadurch gekennzeichnet, daß der zweite Schaltkreis (8, 12, 13, 14) in Reihenschaltung zwischen Gleichspannungsquelle (3) und Masse (5) einen Widerstand (13) sowie einen Kondensator (14) enthält und ferner einen Transistorschalter (8) zum Kurzschließen des Kondensators aufweist wobei der erste Transistorschalter an seiner Basis das erste Signal empfängt;
und daß der vierte Schaltkreis (9, 15, 16) in Reihenschaltung zwischen Gleichspannungsquelle und Masse einen zweiten Widerstand (15) sowie einen zweiten Kondensator (16) umfaßt und ferner einen zweiten Transistorschalter (9) zum Kurzschließen des zweiten Kondensators aufweist, wobei der zweite Transistorschalter an seiner Basis das dritte Signal empfängt.

**Revendications**

1. Dispositif de détection de sens et de vitesse de rotation d'une pièce rotative (4), comprenant un premier circuit (7, 11) incluant un moyen transducteur (7), le premier circuit étant alimenté par une source de tension à courant continu (3) et réagissant à la rotation de la pièce pour engendrer un premier signal (B) ayant la forme d'un train d'impulsions dont la fréquence est fonction de la vitesse de rotation de la pièce, un second circuit (8, 13, 14, 12) alimenté par ladite source de tension à courant continu et incluant un premier réseau d'intégration (13, 14) et un premier commutateur de réenclenchement (8) pour ce réseau, ledit commutateur de réenclenchement recevant à une entrée de commande le premier signal, le second circuit engendrant comme sortie du premier réseau d'intégration un second signal (C) en dents de scie dont la fréquence est égale à celle du premier signal, un troisième circuit (6, 10) incluant un second moyen transducteur (6) réagissant à la rotation de la pièce pour engendrer un troisième signal (D) ayant la forme d'une train d'impulsions de fréquence égale à celle du premier signal, l'angle de phase par rapport au premier signal (B) étant fonction du sens de la vitesse de rotation de la pièce, caractérisé en ce que ledit troisième circuit (6, 10) est alimenté par ledit second signal de sorte que le troisième signal a une amplitude variable en fonction de l'angle de phase, et en ce qu'il comprend en outre un quatrième circuit (9, 15, 16) alimenté par la source de tension à courant continu et incluant un second réseau d'intégration (15, 16) et un second commutation de réenclenchement (9) pour ce second réseau d'intégration, le second commutateur de réenclenchement réagissant au troisième signal quand ce signal dépasse une valeur prédéterminée, le quatrième circuit engendrant ainsi un quatrième signal électrique (E)

a) ayant la forme d'impulsions en dents de scie de fréquence égale à celle du premier signal si l'amplitude du troisième signal est supérieure à ladite valeur prédéterminée, ou

b) ayant la forme d'une rampe montante de tension si l'amplitude du troisième signal est inférieure à ladite valeur prédéterminée, et un comparateur (18) recevant ledit quatrième signal et engendrant un signal d'information (F) quand l'amplitude du quatrième signal dépasse une valeur de seuil prédéterminée.

2. Dispositif selon la revendication 1, caractérisé en ce que le premier circuit (7, 11) comprend un premier élément photosensible (7) alimenté par la source de tension à courant continu (3) et exposé d'une manière intermittente à la lumière provenant d'une source de lumière (1) pendant la rotation de ladite pièce (4) pour engendrer ledit premier signal, et en ce que le troisième circuit (6, 10) comprend un second élément photosensible (6) qui est également exposé d'une manière intermittente à la lumière provenant de ladite source de lumière pendant la rotation de la pièce pour engendrer ledit troisième signal.

3. Dispositif selon la revendication 2, caractérisé en ce que le second circuit (8, 12, 13, 14) comprend une résistance (13) et un condensateur (14) connectés en série entre la source de tension à courant continu (3) et la masse (5), et un premier

9        **0 027 947**        10

transistor de commutation (8) servant à court-circuiter ledit condensateur, le premier transistor de commutation recevant à sa base le premier signal, et en ce que le quatrième circuit (9, 15, 16) comprend une seconde résistance (15) et un second condensateur (16) connectés en série entre la source de tension à courant continu et la masse et un second transistor de commutation (9) servant à court-circuiter le second condensateur, ce second transistor recevant à sa base le troisième signal.

FIG. 1

FIG.3

FIG. 2 a

FIG. 2 b